# FASCICULE DE BREVET EUROPEEN

(11) **EP 3 927 147 B1**
(45) Date de publication et mention de la délivrance du brevet: **06.05.2026**
(21) Numéro de dépôt: 20710256.7
(22) Date de dépôt: 19.02.2020
(51) Int. Cl.: A01K 1/015

(54) **COUCHE ÉLASTIQUE POUR STRUCTURE DE MATELAS ADAPTÉE AU CONFORT DES ANIMAUX DANS UNE ENCEINTE D'ÉLEVAGE**
ELASTISCHE SCHICHT FÜR EINE MATRATZENSTRUKTUR, DIE FÜR DEN KOMFORT VON TIEREN IN EINEM ZUCHTBEREICH ANGEPASST IST
ELASTIC LAYER FOR A MATTRESS STRUCTURE DESIGNED FOR THE COMFORT OF ANIMALS IN A BREEDING ENCLOSURE

(30) Priorité: 20.02.2019 FR 1901710
(43) Date de publication de la demande: 29.12.2021
(73) Titulaire: Group Elastoteck, 44390 Nort sur Erdre (FR)
(72) Inventeur: BIORET, Jean-Vincent, 44390 Petit Mars (FR)
(74) Mandataire: Jacobacci & Partners France
(86) Numéro de dépôt international: PCT/FR2020/050315
(87) Numéro de publication internationale: WO 2020/169930

(56) Documents cités:
- EP-A1- 3 011 829
- WO-A1-99/17604
- IE-A2- S 990 443
- US-A1- 2005 076 855

## Description

### Domaine technique de l'invention

La présente invention concerne le domaine technique des structures de matelas qui sont adaptées au confort des animaux dans une enceinte d'élevage.

Elle concerne en particulier une couche élastique qui est adaptée à la fabrication de telles structures de matelas.

### Etat de la technique

Le confort des animaux constitue un paramètre déterminant dans le rendement d'un élevage.

Ce confort influence notamment la santé, la façon de s'alimenter, la prise alimentaire, la fertilité et la longévité des animaux.

A cet effet, de manière courante, en étable, les bovins se reposent individuellement dans des logettes, encore couramment appelées « free stall », dans lesquelles ils sont libres de se lever et de se coucher.

Lorsqu'ils effectuent ces mouvements, les animaux sont susceptibles de se blesser. C'est en particulier le cas lorsque la litière est constituée de paille recouvrant du béton, qui ne protège pas l'animal des risques de glissades.

Pour limiter ce type d'incident et les blessures qui en découlent, il est connu d'équiper le sol de ces logettes avec des matelas adaptés pour améliorer le confort de couchage des animaux.

Ces matelas de confort comprennent pour cela, classiquement, au moins une couche élastique qui est apte à subir une déformation élastique.

Pour rester en place, ces couches élastiques doivent être fixées au sol, habituellement au moyen d'un ensemble de pièces métalliques (par exemple pointes ou visseries) convenablement réparties.

Mais, en pratique, ces pièces métalliques sont souvent saillantes par rapport à la couche élastique et elles peuvent alors être à l'origine de blessures (coupures, frottements, etc.) pour les animaux.

L'état de la technique est représenté par les documents WO9917604A1, US2005076855A1, EP3011829A1 et IES990443A2.

Il existe ainsi un besoin pour une solution qui permettrait la fixation au sol de ladite couche élastique, tout en prévenant le risque de blessures avec ses moyens de fixation.

### Présentation de l'invention

Afin de remédier à l'inconvénient précité de l'état de la technique, la présente invention propose, selon la revendication 1, une couche élastique pour structure de matelas adaptée au confort des animaux dans une enceinte d'élevage, ladite structure de matelas étant destinée à recouvrir le sol d'une zone d'accueil.

Selon l'invention, ladite couche élastique comporte deux faces opposées : une face supérieure qui est apte à subir une déformation élastique et qui comporte au moins un emplacement sur lequel un animal est destiné à prendre appui, et une face inférieure ; les faces supérieure et inférieure définissent l'épaisseur de ladite couche élastique.

La couche élastique est délimitée par des bordures dont l'une au moins desdites bordures est formée par une bande de fixation, monobloc, destinée à recevoir des moyens de solidarisation avec le sol de ladite zone d'accueil.

Et ladite au moins une bande de fixation est formée par au moins une lèvre, laquelle au moins une lèvre comporte une face inférieure, une face supérieure et un bord périphérique libre.

Les faces supérieure et inférieure définissent l'épaisseur de ladite au moins une lèvre.

Et l'épaisseur de ladite au moins une lèvre est inférieure à l'épaisseur de ladite couche élastique.

Laquelle au moins une lèvre comporte au moins une sous-couche de renfort et laquelle au moins une bande de fixation est formée par:
- deux lèvres superposées: une lèvre supérieure et une lèvre inférieure, lesquelles lèvres comportent chacune une face inférieure, une face supérieure et un bord périphérique libre,
   ou
- une lèvre, unique, dont la face supérieure s'étend avantageusement dans le prolongement de la face supérieure de ladite couche élastique.

Une telle structure de la bande de fixation permet une implantation de moyens de solidarisation (éventuellement sous la forme de pièces métalliques) au niveau de ladite au moins une lèvre précitée.

Ces moyens de solidarisation peuvent alors être protégés et recouverts par ladite au moins une lèvre, de manière à prévenir un contact direct avec les animaux.

Les animaux peuvent alors s'installer sur le matelas de confort, sans risque de se blesser avec les moyens de solidarisation.

D'autres caractéristiques non limitatives et avantageuses du produit conforme à l'invention, prises individuellement ou selon toutes les combinaisons techniquement possibles, sont les suivantes :
- pour une zone d'accueil bordée par un couloir de circulation, ladite couche élastique comporte les bordures suivantes : une bordure longitudinale arrière, destinée à se situer le long dudit couloir de circulation, une bordure longitudinale avant, destinée à se situer à distance dudit couloir de circulation, et deux bordures latérales ; et au moins ladite bordure longitudinale arrière est formée par ladite bande de fixation ;
- ladite au moins une lèvre a une largeur allant de 30 à 100 mm, de préférence de 50 à 60 mm ;
- ledit au moins un emplacement est sus-jacent d'une épaisseur continue de matériau élastomère, ou d'au moins deux sous-couches en matériau élastomère formant une chambre étanche destinée à être remplie avec un fluide.

La présente invention concerne encore un procédé pour la fabrication d'une couche élastique selon l'invention.

Ce procédé de fabrication comprend :
(i) une étape de superposition de sous-couches en matériau élastomère comportant deux surfaces en regard, entre lesquelles sont rapportés des moyens intercalaires aptes à empêcher localement la solidarisation desdites surfaces en regard desdites sous-couches pour former au moins deux lèvres superposées et le cas échéant ladite au moins une chambre étanche,
   puis
(ii) une étape de solidarisation des surfaces en contact desdites sous-couches superposées, en dehors de l'encombrement des moyens intercalaires, de sorte que les moyens intercalaires forment lesdites lèvres et le cas échéant ladite au moins une chambre étanche,
   puis
(iii) une étape éventuelle de coupe de l'une au moins desdites lèvres, pour réduire au moins une partie de la largeur de ladite au moins une lèvre.

L'invention concerne aussi la structure de matelas adaptée au confort des animaux dans une enceinte d'élevage, destinée à recouvrir le sol d'une zone d'accueil, laquelle structure de matelas comporte, ou consiste en, au moins une couche élastique selon l'invention.

La présente invention concerne également le procédé pour l'installation d'une structure de matelas selon l'invention.

Ce procédé comprend une étape de solidarisation de la bande de fixation avec le sol de la zone d'accueil par la mise en place de moyens de solidarisation au niveau de ladite au moins une lèvre.

De préférence :
- dans le cas de lèvres ayant des largeurs identiques, les moyens de solidarisation sont rapportés sur la lèvre inférieure et sont recouverts par la lèvre supérieure, ou
- dans le cas d'une largeur de la lèvre supérieure qui est supérieure à la largeur de la lèvre inférieure ou dans le cas d'une bande de fixation formée par une lèvre supérieure unique, les moyens de solidarisation sont rapportés au sein de la lèvre supérieure, orientée vers le sol, puis la couche élastique est manœuvrée de sorte à recourber / replier ladite lèvre supérieure pour former un ourlet.

L'invention concerne aussi l'enceinte d'élevage au sein de laquelle est ménagée au moins une zone d'accueil des animaux dont le sol est recouvert par une structure de matelas selon l'invention. Et ladite au moins une lèvre de la couche élastique est solidarisée avec le sol par le biais de moyens de solidarisation rapportés.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique et de dessus montrant une série de logettes qui est équipée d'une structure de matelas comportant une couche élastique selon l'invention ;
[Fig. 2] est une vue de dessus et partielle de la couche élastique qui comporte une bordure longitudinale arrière formant une bande de fixation destinée à recevoir les moyens de solidarisation au sol, et dont l'emplacement est sus-jacent d'une chambre étanche destinée à être remplie avec un fluide ;
[Fig. 3] est une vue en coupe et partielle d'un premier mode de réalisation pour la couche élastique selon la figure 2, dont les lèvres de la bande de fixation ont des largeurs identiques ;
[Fig. 4] représente de manière schématique, vues de côté, les différentes pièces destinées à être assemblées pour constituer la couche élastique selon la figure 3 ;
[Fig. 5] est une vue en coupe et partielle d'un second mode de réalisation pour la couche élastique selon la figure 2, dont les lèvres de la bande de fixation ont des largeurs différentes ;
[Fig. 6] représente une première étape du procédé pour l'installation d'une structure de matelas selon la figure 5 ;
[Fig. 7] représente une seconde étape du procédé pour l'installation d'une structure de matelas selon la figure 5.

Il est à noter que, sur ces figures, les éléments structurels et/ou fonctionnels communs aux différentes variantes peuvent présenter les mêmes références.

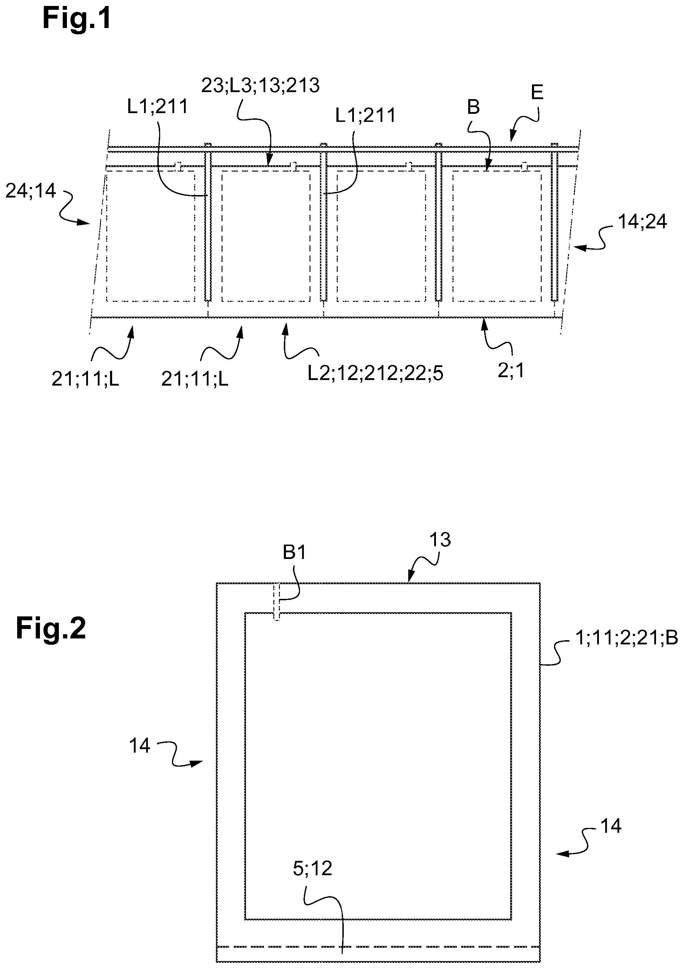

La couche élastique 1 selon l'invention, est destinée à former tout ou partie d'une structure de matelas 2 adaptée au confort des animaux dans une enceinte d'élevage E dans laquelle sont avantageusement ménagées des stalles de couchage (figure 1).

L'enceinte d'élevage E consiste avantageusement en une étable pour l'élevage de bovins, en particulier de bovins laitiers ou de bovins à viande.

Les stalles de couchage consistent ici en des logettes L, ménagées sur au moins une ligne, formant une zone d'accueil pour les animaux.

Les logettes L constituent un compromis entre un couchage confortable pour le bovin, le respect du mouvement levé/couché, une station debout confortable et un minimum de souillures dans la logette.

Selon la figure 1, chaque logette L, classique en soi, est délimitée par :
- deux séparations latérales L1, par exemple des structures tubulaires,
- un seuil arrière de logette L2, s'étendant le long d'un couloir d'accès,
- une limite avant L3, comprenant avantageusement une barre haute au garrot et un arrêtoir inférieur (ou limiteur d'avancement), formant le fond de la logette L, et
- un sol L4, par exemple une dalle de béton.

### Matelas de confort

La structure de matelas 2 est désignée encore sous le nom de « matelas de confort ».

La structure de matelas 2 (et sa couche élastique 1) est ici continue, de sorte à recouvrir le sol L4 des logettes L alignées.

La structure de matelas 2 comporte ainsi plusieurs emplacements 21 qui sont juxtaposées longitudinalement, selon un agencement du type en bataille (figure 1).

De manière alternative, non représentée, chaque logette L peut contenir son propre matelas de confort 2 (et sa couche élastique 1) qui définit alors un emplacement 21 unique.

Le matelas de confort 2 a une forme générale rectangulaire qui est délimitée par deux couples de bords, à savoir :
- deux bords longitudinaux, à savoir un bord longitudinal arrière 22 destiné à s'étendre le long du seuil arrière L2 des logettes L équipées, et un bord longitudinal avant 23 destiné à s'étendre le long de la limite avant L3 de la ligne de logettes L, et
- deux bords transversaux 24, destinés à se situer au niveau des séparations latérales L1 des deux logettes L en bout de ligne (non représentés).

Le matelas de confort 2 comporte encore deux faces opposées :
- une face supérieure 25, apte à subir une déformation élastique et formant les emplacements 21 sur lesquelles les animaux sont destinés à prendre appui, et
- une face inférieure 26, destinée à reposer sur le sol L4 des logettes L.

Chacun des emplacements 21 du matelas de confort 2 est destinée à accueillir ici un animal.

Chaque emplacement 21 correspond ainsi à la surface au sol L4 d'une logette L, et est délimitée latéralement par deux séparations latérales L1.

Chacun des emplacements 21 a alors une forme générale rectangulaire qui est délimitée par différentes bordures (figure 1) :
- deux bordures latérales 211, situées chacune à l'aplomb d'une séparation latérale L1 de logette L,
- une bordure arrière 212, attenante au seuil arrière L2 de la logette L (formant une partie du bord longitudinal arrière 22 du matelas de confort 2), et
- une bordure avant 213, attenante à la limite avant L3 de la logette L (formant une partie du bord longitudinal avant 23 du matelas de confort 2).

### Couche élastique du matelas de confort

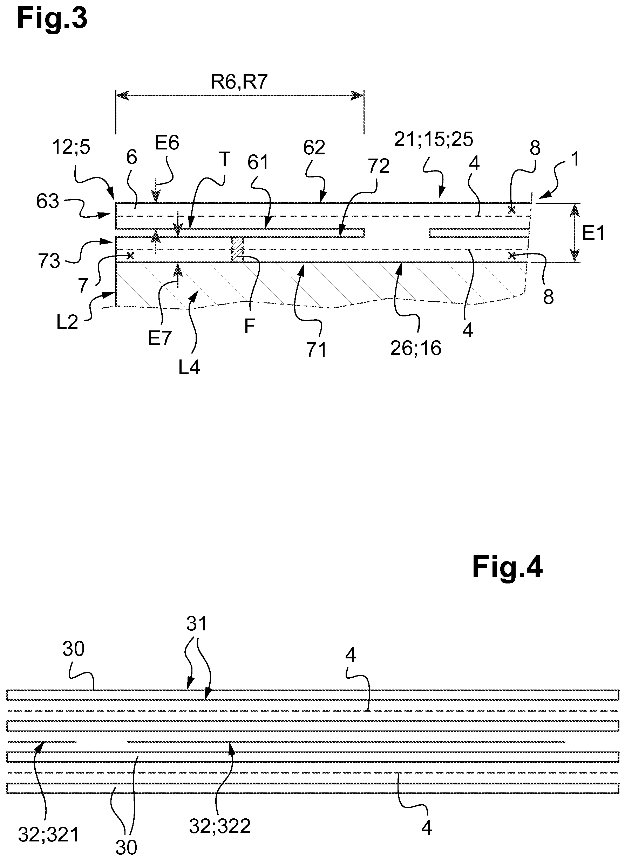

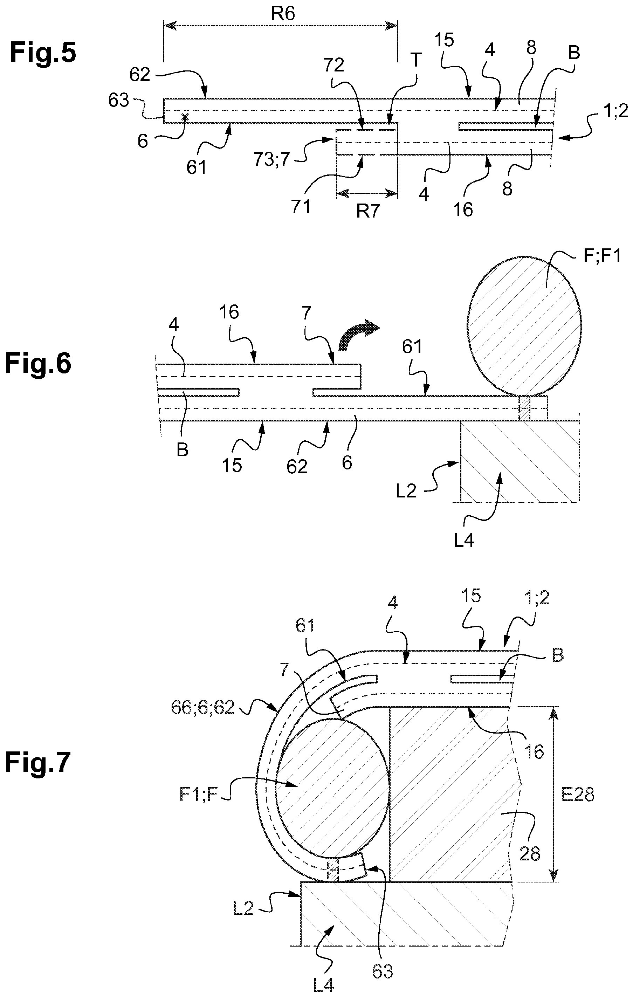

Selon l'invention, la couche élastique 1 peut former :
- une partie du matelas de confort 2 (en particulier une partie de son épaisseur), par exemple recouvrant une sous-couche de confort 28 (figure 7), ou
- intégralement le matelas de confort 2 (figure 3).

En particulier, cette couche élastique 1 comporte avantageusement une forme générale rectangulaire qui est délimitée par deux couples de bordures :
- deux bordures longitudinales, l'une arrière 12 et l'autre avant 13, formant respectivement les bords longitudinaux arrière 22 et avant 23 du matelas de confort 2, et
- deux bordures transversales 14, formant respectivement les bords transversaux 24 du matelas de confort 2.

En particulier, la bordure longitudinale arrière 12 est destinée à se situer le long du couloir de circulation ; et la bordure longitudinale avant 13 est destinée à se situer à distance de ce même couloir de circulation.

La couche élastique 1 comporte encore deux faces opposées :
- une face supérieure 15, destinée à former la face supérieure 25 du matelas de confort 2, et
- une face inférieure 16, destinée à être orientée vers le sol L4 et formant éventuellement la face inférieure 26 du matelas de confort 2 (en particulier dans le cas d'une couche élastique 1 formant intégralement le matelas de confort 2).

Ces faces supérieure et inférieure 15, 16 définissent l'épaisseur E1 de la couche élastique 1.

La face supérieure 15 de la couche élastique 1 est ainsi apte à subir une déformation élastique. Elle comporte au moins un emplacement 11, correspondant aux emplacements 21 précités du matelas de confort 2, sur lequel un animal est destiné à prendre appui.

Cette face supérieure 15 comporte encore avantageusement un relief antidérapant, pour réduire le risque de glissement pour les animaux.

Cette couche élastique 1 est réalisée dans au moins un matériau apte à subir une déformation élastique, dit encore « matériau élastique », avantageusement choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette couche élastique 1 est avantageusement réalisée monobloc, soit mono-matériau (dans un seul matériau), soit multi-matériaux (avec au moins deux sous-couches superposées réalisées dans des matériaux différents).

La couche élastique 1 peut encore contenir des sous-couches de renfort 4, dont l'agencement est décrit par la suite en relation avec la figure 3 et suivante.

Ces sous-couches de renfort 4 sont avantageusement choisies parmi les fibres textiles, les fibres de métal ou tout autre produit apportant la stabilité et/ou la résistance à l'élongation.

Ces sous-couches de renfort 4 consistent par exemple en une armature textile servant de renfort, réalisée avantageusement en un matériau choisi parmi le nylon, le coton, le polyester, le polyamide ou tout autre textile de renfort.

Selon l'invention, l'une au moins des bordures 12, 13, 14 de cette couche élastique 1 consiste en une bande de fixation 5, monobloc, destinée à recevoir des moyens de solidarisation F avec le sol L4 de la zone d'accueil L.

En l'espèce, la bordure longitudinale arrière 12 de cette couche élastique 1 forme ici cette bande de fixation 5.

Cette bande de fixation 5 est formée par au moins une lèvre 6, 7 (figures 3 et 5).

Ladite au moins une lèvre 6, 7 comporte une face inférieure 61, 71, une face supérieure 62, 72 et un bord périphérique libre 63, 73.

Les faces supérieure et inférieure 62, 61 ; 72, 71 d'une lèvre 6, 7 s'étendent avantageusement parallèlement l'une par rapport à l'autre.

Les faces supérieure et inférieure 62, 61 ; 72, 71 d'une lèvre 6, 7 définissent l'épaisseur E6, E7 de cette lèvre 6, 7.

Et toujours selon l'invention, l'épaisseur E6, E7 de ladite au moins une lèvre 6, 7 est inférieure à l'épaisseur E1 de la couche élastique 1.

En d'autres termes, l'épaisseur E6 d'une lèvre 6 unique, ou le cas échéant l'épaisseur E6, E7 de chaque lèvre 6, 7, est inférieure à l'épaisseur E1 de la couche élastique 1.

Par exemple, ladite au moins lèvre 6, 7 présente avantageusement une épaisseur E6, E7 correspondant à la moitié de l'épaisseur E1 de la couche élastique 1.

Dans le cas d'une bande de fixation 5 comportant deux lèvres 6, 7, l'épaisseur E7 de la lèvre inférieure 7 peut également être inférieure à l'épaisseur E6 de la lèvre supérieure 6.

De manière générale, ladite au moins lèvre 6, 7 présente avantageusement une hauteur (dit encore épaisseur) E6, E7 allant de 2 à 5 mm ; la hauteur E1 (dit encore épaisseur) de la couche élastique 1 est quant à elle de 5 à 10 mm.

Deux modes de réalisation de la bande de fixation 5 sont illustrés sur les figures 3 et suivantes :
- la bande de fixation 5 est formée par deux lèvres superposées, avec une lèvre supérieure 6 et une lèvre inférieure 7 (figures 3 et 5 notamment), et
- la bande de fixation 5 est formée par une lèvre 6, unique (avantageusement, selon la figure 7, seulement la lèvre supérieure 6 et dépourvue de la lèvre inférieure 7 qui est illustrée en traits discontinus).

Dans un premier mode de réalisation, la bande de fixation 5 comporte ainsi avantageusement deux lèvres superposées (figures 3 et 5) :
- une lèvre supérieure 6, située dans le prolongement de la face supérieure 15 de la couche élastique 1, et
- une lèvre inférieure 7, située dans le prolongement de la face inférieure 16 de la couche élastique 1.

Ces lèvres 6, 7 comportent chacune une face inférieure (du côté de la face inférieure 16 de la couche élastique 1), une face supérieure (du côté de la face supérieure 15 de la couche élastique 1) et un bord périphérique libre.

En particulier, la lèvre supérieure 6 comporte :
- une face inférieure 61, en regard de la lèvre inférieure 7,
- une face supérieure 62, dans le prolongement de la face supérieure 15 de la couche élastique 1, et
- un bord périphérique libre 63.

La lèvre inférieure 7 comporte également :
- une face inférieure 71, dans le prolongement de la face inférieure 16 de la couche élastique 1,
- une face supérieure 72, en regard de la lèvre supérieure 6, et
- un bord périphérique libre 73.

La face inférieure 61 de la lèvre supérieure 6 et la face supérieure 72 de la lèvre inférieure 7 sont ainsi, d'une part, en regard l'une de l'autre et, d'autre part, indépendantes / dissociées l'une par rapport à l'autre.

Ces deux lèvres 6, 7 délimitent ainsi une sorte de fente T, s'étendant dans une partie de l'épaisseur de cette couche élastique 1 (entre les deux faces 15, 16 opposées de la couche élastique 1).

Cette fente T est en plus débouchante ici le long de la bordure longitudinale arrière 12 de la couche élastique 1, et avantageusement sur une partie de la longueur des bordures transversales 14 de cette même couche élastique 1.

Les lèvres 6, 7 sont en particulier définies par une cote en largeur, respectivement R6 et R7 (représentée sur les figures 3 et 5).

Cette cote en largeur R6, R7 d'une lèvre 6, 7 correspond à la cote mesurée entre son bord périphérique libre 63, 73 et le fond de la fente T.

En pratique, les lèvres 6, 7 peuvent comporter les cotes en largeur R6, R7 suivantes :
- les lèvres 6, 7 ont des largeurs identiques (figure 3), ou
- la largeur R6 de la lèvre supérieure 6 est supérieure à la largeur R7 de la lèvre inférieure 7 (figure 5).

Pour des largeurs identiques, les lèvres 6, 7 ont avantageusement une largeur R6, R7 allant de 30 à 100 mm, de préférence de 50 à 70 mm.

Pour des largeurs différentes, la lèvre supérieure 6 a par exemple une largeur R6 allant de 30 à 100 mm, de préférence de 50 à 70 mm. Et la lèvre inférieure 7 a par exemple une largeur R7 allant de 5 à 10 mm.

Dans le second mode de réalisation, la bande de fixation 5 est ainsi formée par une lèvre 6, unique (figure 5).

En d'autres termes, la bande de fixation 5 comporte avantageusement uniquement la lèvre supérieure 6, et est dépourvue de la lèvre inférieure 7.

En particulier, la lèvre supérieure 6 comporte ainsi :
- une face inférieure 61, s'étendant dans l'épaisseur E1 de la couche élastique 1 et à distance de la face inférieure 16 de la couche élastique 1, et
- une face supérieure 62, dans le prolongement de la face supérieure 15 de la couche élastique 1.

La lèvre supérieure 6 a par exemple une largeur R6 allant de 30 à 100 mm, de préférence de 50 à 70 mm.

De manière générale, ladite au moins une lèvre 6, 7 comporte encore avantageusement au moins une sous-couche de renfort 4.

Cette sous-couche de renfort 4 est intéressante pour conférer une résistance mécanique optimale lors de la mise en place des moyens de solidarisation F.

Par ailleurs et de manière générale, ledit au moins un emplacement 11, 21 est par exemple sus-jacent :
- d'une épaisseur continue de matériau élastomère (non représenté), ou
- d'au moins deux sous-couches 8 en matériau élastomère, formant ensemble une chambre étanche B destinée à être remplie avec un fluide (figure 3 et 5).

Ainsi, dans le mode de réalisation selon les figures 3 et 5, la couche élastique 1 comporte ici, dans son épaisseur et au sein de son matériau constitutif, des chambres étanches B. La couche élastique 1, et en particulier son matériau constitutif, définit ainsi directement les chambres étanches B.

Les chambres étanches B sont juxtaposées et sont chacune sous-jacentes d'un emplacement 11 de la couche élastique 1. En d'autres termes, les emplacements 11 de la couche élastique 1 sont chacune sus-jacentes d'une chambre étanche B en présence.

De préférence, chaque emplacement 11 comporte alors l'une de ces chambres étanches B, qui lui est propre.

Chaque chambre étanche B comporte, vue de dessus, un contour rectangulaire correspondant au moins approximativement à la surface d'une logette L (figures 1 et 2).

Le fluide destiné à remplir chaque chambre étanche B est avantageusement choisi parmi l'eau, un gaz (l'air notamment), un gel.

Chaque chambre étanche B est pour cela associée à un orifice débouchant B1 pour son accès, notamment pour son remplissage et/ou sa vidange, par exemple un orifice équipé d'une valve.

La valve est raccordée de manière étanche avec l'orifice débouchant, par exemple via un sertissage métallique.

Chaque chambre étanche B est ainsi individuelle. Et elle est destinée à reprendre sa forme quand l'animal se retire.

### Fabrication de la couche élastique

La couche élastique 1 selon l'invention peut être fabriquée par l'assemblage d'un ensemble de sous-couches superposées, pour former un ensemble de type monobloc.

La technologie d'assemblage peut être choisie par exemple parmi - la vulcanisation, - le collage, - le soudage.

Tel qu'illustré sur la figure 4, le procédé pour la fabrication de la couche élastique 1 comprend :
(i) une étape de superposition de sous-couches en matériau élastomère 30 comportant deux surfaces opposées 31, entre lesquelles sont rapportés :
   - des moyens intercalaires 32 aptes à empêcher localement la solidarisation des surfaces 31 en regard desdites couches 30 pour former les lèvres 6, 7 et le cas échéant les chambres étanches B, et
   - éventuellement des couches de renfort 4, puis
(ii) une étape de solidarisation des surfaces 31 en contact desdites sous-couches en matériau élastomère 30 (c'est-à-dire en dehors de l'encombrement des moyens intercalaires 32), de sorte que les moyens intercalaires 32 forment les lèvres 6, 7 et le cas échéant les chambres étanches B.

Les moyens intercalaires 32 consistent en tout moyen évitant la solidarisation entre les surfaces 31 en regard des couches 30 à assembler.

Dans le cas d'une vulcanisation, les moyens intercalaires 32 consistent par exemple en des bandes ou des tubes qui sont avantageusement réalisés dans un matériau choisi parmi :
- un film anti-feu contenant un retardateur, par exemple en polypropylène, en acrylonitrile butadiène styrène,
- une couche de silicone,
- une couche d'un matériau élastomère vulcanisé, par exemple un tuyau réalisé par exemple en caoutchouc styrène-butadiène (SBR), en caoutchouc naturel (NR), ou en éthylène-propylène-diène monomère.

Ces moyens intercalaires 32 sont en particulier disposés entre deux sous-couches en matériau élastomère 30 à assembler l'une avec l'autre.

De manière générale, ces moyens intercalaires 32 sont répartis à façon, en fonction de l'agencement recherché des lèvres 6, 7 et le cas échéant des chambres étanches B.

En l'espèce, comme illustré sur la figure 4, l'étape de superposition comprend avantageusement une superposition de quatre sous-couches en matériau élastomère 30 avec une sous-couche de moyens intercalaires 32 qui est rapportée entre deux desdites sous-couches en matériau élastomère 30.

La sous-couche de moyens intercalaires 32 comporte une bande 321 qui est agencée latéralement pour former les lèvres 6, 7.

De manière générale, les quatre sous-couches en matériau élastomère 30 présentent avantageusement des largeurs identiques.

Sans étape additionnelle, il est ainsi possible d'obtenir des lèvres 6, 7 ayant des largeurs identiques (figure 3).

De manière alternative, il est encore possible de réaliser une étape additionnelle de coupe de l'une au moins des lèvres 6, 7, avantageusement la lèvre inférieure 7, pour réduire au moins une partie de la largeur de ladite au moins une lèvre 7.

En fonction de la largeur de coupe, il est ainsi possible d'obtenir une bande de fixation 5 comportant :
- des lèvres 6, 7 ayant des largeurs différentes (figures 5 à 7), lorsque la lèvre inférieure 7 est coupée partiellement, ou
- une lèvre 6, unique, avantageusement une lèvre supérieure 6 dont la face supérieure 62 s'étend avantageusement dans le prolongement de la face supérieure 15 de ladite couche élastique 1, lorsque la lèvre inférieure 7 est coupée à sa base (figure 5).

Encore de manière générale, la sous-couche de moyens intercalaires 32 peut comporter encore plusieurs rectangles 322 qui sont répartis sur la longueur des sous-couches en matériau élastomère 30, pour former les chambres étanches B.

### Procédé pour l'installation d'une structure de matelas

La présente invention concerne le procédé pour l'installation de la structure de matelas 2.

Ce procédé d'installation comprend une étape de solidarisation de la bande de fixation 5 avec le sol L4 de la zone d'accueil L par la mise en place de moyens de solidarisation F au niveau de l'une au moins des lèvres 6, 7 (figures 3 ou 8).

En particulier, les moyens de solidarisation F sont avantageusement rapportés de sorte à traverser l'une des lèvres 6, 7. Ces moyens de solidarisation F sont ensuite protégés et recouverts par l'une des lèvres 6, 7.

Cette étape de solidarisation peut prendre différentes formes, notamment en fonction de la largeur des lèvres 6, 7.

Dans le cas de lèvres 6, 7 ayant des largeurs identiques (figure 3), les moyens de solidarisation F sont avantageusement rapportés sur la lèvre inférieure 7.

Cette mise en place peut être facilitée par écartement de la lèvre supérieure 6 par rapport à la lèvre inférieure 7.

La lèvre supérieure 6 peut alors être rabattue sur la lèvre inférieure 7, de sorte à recouvrir les moyens de solidarisation F qui peuvent également s'étendre au sein de la fente T.

Dans le cas d'une largeur R6 de la lèvre supérieure 6 qui est supérieure à la largeur R7 de la lèvre inférieure 7 ou encore dans le cas d'une bande de fixation 5 formée par une lèvre supérieure 6 unique, les moyens de solidarisation F sont avantageusement rapportés au sein de la lèvre supérieure 6, orientée vers le sol.

Pour cela, la couche élastique 1 est avantageusement disposée le long et en-dehors de la zone d'accueil L, de sorte que sa face supérieure 15 soit orientée vers le sol et au-dessus du couloir (figure 6).

De même, la face supérieure 62 de la lèvre supérieure 6 est orientée vers le sol, au niveau de sa bande de fixation dans la zone d'accueil L.

La lèvre supérieure 6, attenante au sol et bordant la zone d'accueil L, est ensuite solidarisée avec le sol L4 de la zone d'accueil L.

Cette fixation est avantageusement réalisée en combinaison avec un profilé F1 qui est rapporté contre la face inférieure 61 de la lèvre supérieure 6 (orientée vers le haut) et dont la section est destinée à définir la courbure appliquée à cette lèvre supérieure 6.

La couche élastique 1 est ensuite manoeuvrée en pivotement autour de sa bande de fixation 5, de sorte à recouvrir la zone d'accueil L.

En d'autres termes, la couche élastique 1 est disposée de sorte à recouvrir la zone d'accueil L, de sorte que sa face inférieure 16 soit orientée vers le sol.

En pratique, cette zone d'accueil L peut également être recouverte d'une sous-couche de confort 28, intercalaire, destinée ainsi à venir entre la couche élastique 1 et le sol L4 (figure 7).

Cette sous-couche de confort 28 consiste avantageusement en une pièce (ou un bloc de matière), de forme générale parallélépipédique, de préférence réalisée dans un matériau élastique.

Par « matériau élastique », on entend avantageusement une plaque réalisée en granules de caoutchouc (agglomérés ou non agglomérés) ou en latex.

La masse volumique de ladite sous-couche de confort 28 est avantageusement comprise entre 150 et 800 kg / m3, de préférence de 450 à 550 kg / m3.

La cote en épaisseur E28 de cette sous-couche de confort 28 est avantageusement de deux à quatre fois la cote en épaisseur E1 de la couche élastique 1.

Lors de cette manoeuvre, la lèvre supérieure 6 fixée subit une action d'un recourbement / repliement pour former un ourlet 66 (en forme générale de U), avantageusement de sorte à envelopper le profilé F1.

La différence de largeur entre les lèvres 6, 7, voire l'absence de lèvre inférieure 7, crée ainsi une sorte de réservation autorisant le repliement, sur lui-même, de la lèvre supérieure 6.

Les moyens de solidarisation F, en particulier le profilé F1, sont alors avantageusement enveloppés dans l'ourlet 66 formé au niveau de la face inférieure 61 de la lèvre supérieure 6.

En d'autres termes, la lèvre supérieure 6 est recourbée / repliée vers le bord libre 73 de la lèvre inférieure 7 pour former un ourlet 66 et les moyens de solidarisation F sont rapportés / protégés au sein dudit ourlet 66.

Dans ces différents modes de réalisation, les moyens de solidarisation F sont alors être protégés et recouverts par l'une au moins des lèvres 6, 7, de manière à prévenir un contact direct avec les animaux.

Les animaux peuvent alors s'installer sur le matelas de confort 2, sans risque de se blesser avec les moyens de solidarisation F.

## Revendications

1. Couche élastique pour structure de matelas adaptée au confort des animaux dans une enceinte d'élevage, ladite structure de matelas étant destinée à recouvrir le sol d'une zone d'accueil (L),
laquelle couche élastique (1) comporte deux faces opposées : une face supérieure (15) qui est apte à subir une déformation élastique et qui comporte au moins un emplacement (11) sur lequel un animal est destiné à prendre appui, et une face inférieure (16),
lesdites faces supérieure et inférieure (15, 16) définissant l'épaisseur (E1) de ladite couche élastique (1),
laquelle couche élastique (1) est délimitée par des bordures (12, 13, 14) dont l'une au moins desdites bordures (12, 13, 14) est formée par une bande de fixation (5), monobloc, destinée à recevoir des moyens de solidarisation (F) avec le sol (L4) de ladite zone d'accueil (L),
dans laquelle ladite au moins une bande de fixation (5) est formée par au moins une lèvre (6, 7),
laquelle au moins une lèvre (6, 7) comporte une face inférieure (61, 71), une face supérieure (62, 72) et un bord périphérique libre (63, 73),
lesdites faces supérieure et inférieure (62, 61 ; 72, 71) définissant l'épaisseur (E6, E7) de ladite au moins une lèvre (6, 7),
et en ce que l'épaisseur (E6, E7) de ladite au moins une lèvre (6, 7) est inférieure à l'épaisseur (E1) de ladite couche élastique (1),
**caractérisée en ce que**:
laquelle au moins une lèvre (6, 7) comporte au moins une sous-couche de renfort (4),
laquelle au moins une bande de fixation (5) est formée par :
- deux lèvres superposées : une lèvre supérieure (6) et une lèvre inférieure (7), lesquelles lèvres (6, 7) comportent chacune une face inférieure (61, 71), une face supérieure (62, 72) et un bord périphérique libre (63, 73),
ou
- une lèvre (6), unique, dont la face supérieure (62) s'étend avantageusement dans le prolongement de la face supérieure (15) de ladite couche élastique (1).

2. Couche élastique selon la revendication 1, pour une zone d'accueil bordée par un couloir de circulation, **caractérisée en ce que** ladite couche élastique (1) comporte les bordures suivantes :
- une bordure longitudinale arrière (12), destinée à se situer le long dudit couloir de circulation,
- une bordure longitudinale avant (13), destinée à se situer à distance dudit couloir de circulation, et
- deux bordures latérales (14),
et **en ce qu'**au moins ladite bordure longitudinale arrière (12) est formée par ladite bande de fixation (5).

3. Couche élastique, selon l'une quelconque des revendications 1 ou 2, dont ladite au moins une bande de fixation (5) est formée par les deux lèvres superposées,
**caractérisée en ce que** les lèvres (6, 7) ont des largeurs (R6, R7) identiques.

4. Couche élastique, selon l'une quelconque des revendications 1 ou 2, dont ladite au moins une bande de fixation (5) est formée par les deux lèvres superposées, **caractérisée**
**en ce que** la largeur (R6) de la lèvre supérieure (6) est supérieure à la largeur (R7) de la lèvre inférieure (7).

5. Couche élastique, selon l'une quelconque des revendications 1 à 4, **caractérisée en ce que** ladite au moins une lèvre (6, 7) a une largeur allant de 30 à 100 mm, de préférence de 50 à 60 mm.

6. Couche élastique, selon l'une quelconque des revendications 1 à 5, **caractérisée en ce qu'**elle est réalisée dans au moins un matériau élastique, avantageusement choisi parmi les matériaux élastomères ou les matériaux plastiques ou élastomères thermoplastiques (TPE), avantageusement encore obtenue par superposition et solidarisation de sous-couches en matériau élastomère (30).

7. Procédé pour la fabrication d'une couche élastique (1) selon l'une quelconque des revendications 1 à 6,
lequel procédé de fabrication comprend :
(i) une étape de superposition de sous-couches en matériau élastomère (30) comportant deux surfaces (31) en regard, entre lesquelles sont rapportés des moyens intercalaires (32) aptes à empêcher localement la solidarisation desdites surfaces (31) en regard desdites sous-couches (30) pour former au moins deux lèvres (6, 7) superposées et le cas échéant au moins une chambre étanche (B),
puis
(ii) une étape de solidarisation des surfaces (31) en contact desdites sous-couches superposées (30), en dehors de l'encombrement des moyens intercalaires (32), de sorte que les moyens intercalaires (32) forment lesdites lèvres (6, 7) et le cas échéant ladite au moins une chambre étanche (B),
puis
(iii) une étape éventuelle de coupe de l'une au moins desdites lèvres (7), pour réduire au moins une partie de la largeur de ladite au moins une lèvre (7).

8. Structure de matelas adaptée au confort des animaux dans une enceinte d'élevage, destinée à recouvrir le sol d'une zone d'accueil (L), laquelle structure de matelas (2) comporte, ou consiste en, au moins une couche élastique (1) selon l'une quelconque des revendications 1 à 6.

9. Procédé pour l'installation d'une structure de matelas selon la revendication 8, **caractérisé en ce qu'**il comprend une étape de solidarisation de la bande de fixation (5) avec le sol (L4) de la zone d'accueil (L) par la mise en place de moyens de solidarisation (F) au niveau de ladite au moins une lèvre (6, 7).

10. Procédé pour l'installation d'une structure de matelas, selon la revendication 9, **caractérisé en ce que**, dans le cas de lèvres (6, 7) ayant des largeurs (R6, R7) identiques, les moyens de solidarisation (F) sont rapportés sur la lèvre inférieure (7) et sont recouverts par la lèvre supérieure (6).

11. Procédé pour l'installation d'une structure de matelas, selon la revendication 9, **caractérisé en ce que**, dans le cas d'une largeur (R6) de la lèvre supérieure (6) qui est supérieure à la largeur (R7) de la lèvre inférieure (7) ou dans le cas d'une bande de fixation (5) formée par une lèvre supérieure (6) unique, les moyens de solidarisation (F) sont rapportés au sein de la lèvre supérieure (6), orientée vers le sol, puis la couche élastique (1) est manoeuvrée de sorte à recourber / replier ladite lèvre supérieure (6) pour former un ourlet (66).

12. Enceinte d'élevage au sein de laquelle est ménagée au moins une zone d'accueil (L) des animaux dont le sol (L4) est recouvert par une structure de matelas (2) selon la revendication 8, et en ce que ladite au moins une lèvre (6, 7) de la couche élastique (1) est solidarisée avec le sol (L4) par le biais de moyens de solidarisation (F) rapportés.

## Patentansprüche

1. Elastische Schicht für eine Matratzenstruktur, die auf den Komfort von Tieren in einem Aufzuchtraum ausgelegt ist, wobei die Matratzenstruktur dazu bestimmt ist, den Boden eines Aufnahmebereichs (L) zu bedecken,
wobei die elastische Schicht (1) zwei gegenüberliegende Seiten aufweist: eine Oberseite (15), die einer Verformung unterliegen kann und mindestens eine Stelle (11) aufweist, auf der sich ein Tier abstützen soll, und eine Unterseite (16),
wober die Ober- und die Unterseite (15, 16) die Dicke (E1) der elastischen Schicht (1) definieren,
wobei die elastische Schicht (1) durch Kanten (12, 13, 14) begrenzt ist, von denen mindestens eine der Kanten (12, 13, 14) durch ein einteiliges Befestigungsband (5) gebildet wird, das dazu bestimmt ist, Verbindungsmittel (F) mit dem Boden (L4) des Aufnahmebereichs (L) aufzunehmen,
wobei das mindestens eine Befestigungsband (5) durch mindestens eine Lippe (6, 7) gebildet wird,
wobei mindestens eine Lippe (6, 7) eine Unterseite (61, 71), eine Oberseite (62, 72) und einen freien Umfangsrand (63, 73) aufweist,
wobei die Ober- und die Unterseite (62, 61; 72, 71) die Dicke (E6, E7) der mindestens einen Lippe (6, 7) definieren,
und dass die Dicke (E6, E7) der mindestens einen Lippe (6, 7) kleiner ist als die Dicke (E1) der elastischen Schicht (1),
**dadurch gekennzeichnet, dass**:
mindestens eine Lippe (6, 7) mindestens eine Verstärkungsunterschicht (4) aufweist, wobei das mindestens eine Befestigungsband (5) durch Folgendes gebildet wird:
- zwei übereinanderliegenden Lippen: eine obere Lippe (6) und eine untere Lippe (7), wobei die Lippen (6, 7) jeweils eine Unterseite (61, 71), eine Oberseite (62, 72) und einen freien Umfangsrand (63, 73) aufweisen,
oder
- einer einzigen Lippe (6), deren Oberseite (62) sich vorteilhafterweise in Verlängerung der Oberseite (15) der elastischen Schicht (1) erstreckt.

2. Elastische Schicht nach Anspruch 1, für einen von einem Verkehrskorridor umrandeten Aufnahmebereich, **dadurch gekennzeichnet, dass** die elastische Schicht (1) folgende Kanten aufweist:
- eine hintere Längskante (12), die dazu bestimmt ist, sich entlang des Verkehrskorridorsn zu befinden,
- eine vordere Längskante (13), die dazu bestimmt ist, sich in einem Abstand zu dem Verkehrskorridor zu befinden, und
- zwei Seitenkanten (14),
und dass mindestens die hintere Längskante (12) durch das Befestigungsband (5) gebildet wird.

3. Elastische Schicht nach einem der Ansprüche 1 oder 2, wobei das mindestens eine Befestigungsband (5) durch die beiden übereinanderliegenden Lippen gebildet wird,
**dadurch gekennzeichnet, dass** die Lippen (6, 7) identische Breiten (R6, R7) aufweisen.

4. Elastische Schicht nach einem der Ansprüche 1 oder 2, wobei das mindestens eine Befestigungsband (5) durch die beiden übereinanderliegenden Lippen gebildet wird, **dadurch gekennzeichnet, dass** die Breite (R6) der oberen Lippe (6) größer ist als die Breite (R7) der unteren Lippe (7).

5. Elastische Schicht nach einem der Ansprüche 1 bis 4, **dadurch gekennzeichnet, dass** die mindestens eine Lippe (6, 7) eine Breite von 30 bis 100 mm, vorzugsweise von 50 bis 60 mm, aufweist.

6. Elastische Schicht nach einem der Ansprüche 1 bis 5, **dadurch gekennzeichnet, dass** sie aus mindestens einem elastischen Material hergestellt ist, das vorteilhafterweise aus Elastomermaterialien oder Kunststoffmaterialien oder thermoplastischen Elastomeren (TPE) ausgewählt ist, und vorteilhafterweise noch durch Übereinanderlegen und Verbindung von Unterschichten aus Elastomermaterial (30) erhalten wird.

7. Verfahren zur Herstellung einer elastischen Schicht (1) nach einem der Ansprüche 1 bis 6,
wobei das Herstellungsverfahren umfasst:
(i) einen Schritt des Übereinanderlegens von Unterschichten aus Elastomermaterial (30), die zwei gegenüberliegende Oberflächen (31) aufweisen, zwischen denen Zwischenmittel (32) angebracht sind, die geeignet sind, die Verbindung der Oberflächen (31) gegenüber den Unterschichten (30) lokal zu verhindern, um mindestens zwei übereinanderliegende Lippen (6, 7) und gegebenenfalls mindestens eine abgedichtete Kammer (B) zu bilden,
dann
(ii) einen Schritt des Verbindens der Oberflächen (31) in Kontakt mit den übereinanderliegenden Unterschichten (30), außerhalb des Platzbedarfs der Zwischenmittel (32), so dass die Zwischenmittel (32) die Lippen (6, 7) und gegebenenfalls die mindestens eine abgedichtete Kammer (B) bilden,
dann
(iii) einen eventuellen Schritt des Schneidens der mindestens einen der Lippen (7), um mindestens einen Teil der Breite der mindestens einen Lippe (7) zu reduzieren.

8. Matratzenstruktur, die auf den Komfort von Tieren in einem Aufzuchtraum ausgelegt und dazu bestimmt ist, den Boden eines Aufnahmebereichs (L) zu bedecken, wobei die Matratzenstruktur (2) mindestens eine elastische Schicht (1) nach einem der Ansprüche 1 bis 6 umfasst oder aus dieser besteht.

9. Verfahren zum Einbau einer Matratzenstruktur nach Anspruch 8, **dadurch gekennzeichnet, dass** es einen Schritt des Verbindens des Befestigungsbands (5) mit dem Boden (L4) des Aufnahmebereichs (L) durch das Anbringen von Verbindungsmitteln (F) an der mindestens einen Lippe (6, 7) umfasst.

10. Verfahren zum Einbau einer Matratzenstruktur nach Anspruch 9, **dadurch gekennzeichnet, dass** bei Lippen (6, 7) mit identischen Breiten (R6, R7) die Verbindungsmittel (F) an der unteren Lippe (7) angebracht und von der oberen Lippe (6) abgedeckt werden.

11. Verfahren zum Einbau einer Matratzenstruktur nach Anspruch 9, **dadurch gekennzeichnet, dass** im Falle einer Breite (R6) der oberen Lippe (6), die größer ist als die Breite (R7) der unteren Lippe (7), oder im Falle eines durch eine einzige obere Lippe (6) gebildeten Befestigungsbands (5) die Verbindungsmittel (F) innerhalb der oberen Lippe (6) angebracht ist, die zum Boden gerichtet ist, und dann die elastische Schicht (1) so bewegt wird, dass die obere Lippe (6) umgebogen/umgeschlagen wird, um einen Saum (66) zu bilden.

12. Aufzuchtraum, in dem mindestens ein Aufnahmebereich (L) für Tiere eingerichtet ist, dessen Boden (L4) mit einer Matratzenstruktur (2) nach Anspruch 8 bedeckt ist, und wobei die mindestens eine Lippe (6, 7) der elastischen Schicht (1) durch angebrachte Verbindungsmittel (F) mit dem Boden (L4) verbunden ist.

## Claims

1. An elastic layer for a mattress structure adapted for the comfort of animals in a livestock enclosure, said mattress structure being intended to cover the ground of an accommodation area (L),
said elastic layer (1) including two opposite faces: an upper face (15) that is able to undergo an elastic deformation and that includes at least one location (11) suitable for an animal to rest on, and a lower face (16),
said upper and lower faces (15, 16) defining the thickness (E1) of said elastic layer (1),
said elastic layer (1) being delimited by borders (12, 13, 14), at least one of said borders (12,13, 14) being formed by a one-piece fastening strip (5) intended to receive means (F) for the securing to the ground (L4) of said accommodation area (L),
wherein said at least one fastening strip (5) is formed by at least one lip (6, 7),
said at least one lip (6, 7) including a lower face (61, 71), an upper face (62, 72) and a free peripheral edge (63, 73),
said upper and lower faces (62, 61; 72, 71) defining the thickness (E6, E7) of said at least one lip (6, 7),
and in that the thickness (E6, E7) of said at least one lip (6, 7) is less than the thickness (E1) of said elastic layer (1),
**characterized in that** said at least one lip (6, 7) includes at least one reinforcement sub-layer (4),
wherein said at least one fastening strip (5) is formed by:
- two superposed lips: an upper lip (6) and a lower lip (7),
said lips (6, 7) each including a lower face (61, 71), an upper face (62, 72) and a free peripheral edge (63, 73),
or
- a single lip (6), whose upper face (62) advantageously extends in the continuation of the upper face (15) of said elastic layer (1).

2. The elastic layer according to claim 1, for an accommodation area bordered by a circulation corridor, **characterized in that** said elastic layer (1) includes the following borders:
- a rear longitudinal border (12), intended to be located along said circulation corridor,
- a front longitudinal border (13), intended to be located remote from said circulation corridor, and
- two lateral borders (14),
and at least said rear longitudinal border (12) is formed by said fastening strip (5).

3. The elastic layer according to claims 1 or 2, whereof said at least one fastening strip (5) is formed by said two superposed lips, **characterized in that** the lips (6, 7) have identical widths (R6, R7).

4. The elastic layer according to claims 1 or 2, whereof said at least one fastening strip (5) is formed by said two superposed lips,
**characterized in that** the width (R6) of the upper lip (6) is greater than the width (R7) of the lower lip (7).

5. The elastic layer according to any one of claims 1 to 4, **characterized in that** said at least one lip (6, 7) has a width from 30 to 100 mm, preferably from 50 to 60 mm.

6. The elastic layer according to any one of claims 1 to 5, **characterized in that** it is made from at least one elastic material, advantageously chosen among the elastomeric materials, or the plastic or thermoplastic elastomeric (TPE) materials, also advantageously obtained by superposition and securing of sub-layers of elastomeric material (30).

7. A method for manufacturing an elastic layer (1) according to any one of claims 1 to 6,
wherein said manufacturing method comprises:
(i) a step of superposing elastomeric material sublayers (30) including two opposite surfaces (31), between which are placed interlayer means (32) for locally preventing the securing of said opposite surfaces (31) of said sub-layers (30) to each other, in order to form at least two superposed lips (6, 7) and, as the case may be, said at least one sealed chamber (B),
then
(ii) a step of securing the surfaces in contact (31) of said superposed sub-layers (30), out of the space occupied by the interlayer means (32), in such a way that the interlayer means (32) form said lips (6, 7) and, as the case may be, said at least one sealed chamber (B),
then
(iii) a potential step of cutting one at least of said lips (7), to reduce at least a part of the width of said at least one lip (7).

8. A mattress structure adapted for the comfort of animals in a livestock enclosure, intended to cover the ground of an accommodation area (L), said mattress structure (2) including, or consisting of, at least one elastic layer (1) according to any one of claims 1 to 6.

9. A method for installing a mattress structure according to claim 8, **characterized in that** it comprises a step of securing the fastening strip (5) to the ground (L4) of the accommodation area (L) by the positioning of securing means (F) at said at least one lip (6, 7).

10. The method for installing a mattress structure, according to claim 9, **characterized in that**, in the case of lips (6, 7) having identical widths (R6, R7), the securing means (F) are placed on the lower lip (7) and are covered by the upper lip (6).

11. The method for installing a mattress structure, according to claim 9, **characterized in that**, in the case of a width (R6) of the upper lip (6) that is greater than the width (R7) of the lower lip (7) or, in the case of a fastening strip (5) formed by a single upper lip (6), the securing means (F) are placed within the upper lip (6), directed towards the ground, then the elastic layer (1) is handled in such a way as to bend / fold said upper lip (6) to form a hem (66).

12. A livestock enclosure within which is arranged at least one accommodation area (L) for the animals, whose ground (L4) is covered with a mattress structure (2) according to claim 8, and in that said at least one lip (6, 7) of the elastic layer (1) is secured to the ground (L4) using added securing means (F).
